(19) Europäisches Patentamt
European Patent Office
Office européen des brevets

(11) Publication number: **0 162 663 B1**

(12) # EUROPEAN PATENT SPECIFICATION

(45) Date of publication of patent specification: **28.08.91**

(51) Int. Cl.5: **C08J 5/00**, C08K 5/00, C08K 5/20, C08L 71/12

(21) Application number: **85303426.2**

(22) Date of filing: **15.05.85**

The file contains technical information submitted after the application was filed and not included in this specification

(54) **Process for producing heat-resistant moldings.**

(30) Priority: **15.05.84 JP 97185/84**
**18.05.84 JP 100103/84**
**25.05.84 JP 106025/84**
**25.05.84 JP 106026/84**
**28.05.84 JP 108139/84**
**05.06.84 JP 114822/84**

(43) Date of publication of application:
**27.11.85 Bulletin 85/48**

(45) Publication of the grant of the patent:
**28.08.91 Bulletin 91/35**

(84) Designated Contracting States:
**DE FR GB IT NL**

(56) References cited:
**EP-A- 155 194**
**EP-A- 0 116 200**
**US-A- 3 483 271**
**US-A- 4 151 151**
**EP-A- 0 115 218**
**DE-A- 2 402 930**
**US-A- 3 956 423**

**PATENTS ABSTRACTS OF JAPAN, vol. 8, no. 24 (C-208)[1461], 02 February 1984**

**PATENTS ABSTRACTS OF JAPAN, vol. 4, no. 77 (C-13)[559], 04 June 1980**

(73) Proprietor: **MITSUBISHI PETROCHEMICAL CO., LTD.**
**5-2, 2-chome, Marunouchi**
**Chiyoda-ku Tokyo 100(JP)**

(72) Inventor: **Tamura, Yutaka, c/o Mitsubishi Petrochem. Co.Ltd.**
**1315, Oaza Wakaguri, Ami-machi**
**Inashiki-gun, Ibaraki(JP)**

(74) Representative: **Moore, Anthony John et al**
**Gee & Co. Chancery House Chancery Lane**
**London WC2A 1QU(GB)**

EP 0 162 663 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for producing thermoplastic resin moldings having good heat resistance.

Thermoplastic resins have the characteristic that they are plasticized and can be easily molded when they are heated to a temperature higher than their melting point or glass transition temperature. The reason for their having a wide variety of uses as compared with thermosetting resins lies largely in their good molding properties.

However, in recent years, there has been a demand for further improvement in the molding properties of thermoplastic resins and obtaining such improvement has received widespread attention in the art.

One of the reasons why widely-used resins represented by polyolefins such as polyethylene and polypropylene, styrene resins such as polystyrene, high impact polystyrene and styrene-acrylonitrile-butadiene copolymer, vinyl chloride resins and acrylic resins are used in great quantities and have a wide variety of uses is that in addition to their performance as materials, they have good molding properties and can be easily shaped.

To meet current requirements for the production of large, thin or complex moldings from such widely used resins having comparatively good molding properties it is necessary to improve their fluid properties still further.

On the other hand, polyamide, polyoxymethylene, polyester (for example polybutylene terephthalate and polyethylene terephthalate), polycarbonate, polyphenylene ether, modified polyphenylene ether, polyarylate, polysulfone, polyether sulfone, polyphenylene sulfide and polyether ether ketone, have been widely used as engineering plastics to replace metals, because of their strength and heat resistance, and their applications extend to machinery components, parts for cars, and parts for electrical and electronic devices.

Since these engineering plastics, besides having high strength and good heat resistance, also have a high melting point and a high melt viscosity, a high molding temperature and a high molding pressure are frequently required for carrying out mold processing. Therefore, improvement of their molding properties is particularly required as compared with the case of widely used plastics.

To improve the molding properties of these thermoplastic resins by reducing the inter-molecular cohesive forces in the polymer one of the following expedients is generally used:

(1) The polymer is copolymerized with a monomer having low polarity, in order to lower its polarity;
(2) Internal plasticization is accelerated introducing branching in the polymer;
(3) The degree of polymerization of the polymer is reduced;
(4) A polymer having a high fluidity, such as low molecular weight polyethylene or ethylene-vinyl acetate copolymer, is added;
(5) A plasticiser is added.

However, adoption of these expedients still leaves many important problems requiring solution. For example, in (1) and (2), the inherent characteristics (for example, heat resistance) of the resin are frequently impaired by a modification such as copolymerization; in (3) and (4), the mechanical strength of the polymer is frequently reduced; and in (5), the molding properties (fluidity) are improved at the expense of heat resistance.

The present inventors have realised that a molding system should preferably have the following characteristics in order to produce moldings without reduction in mechanical strength and impairment of heat resistance:

(1) During molding, i.e., with the system in a fluidized state, a fluidity improving agent becomes compatible with the matrix components to exert a fluidity improving effect similar to that of plasticizers.
(2) After molding, i.e., on cessation of fluidization [temperature lower than the crystal melting point or Tg (glass transmission temperature) of the matrix], the fluidity improving agent undergoes phase separation from the matrix components and does not reduce the Tg of the matrix.

As a result of studies undertaken in the light of the above realization, a technique using a diamide compound of the following general formula has been developed, which is the subject of Japanese Patent Application (OPI) No. 124950/84, U.S. Patent No. 4,530,952 and EP-A-115 219)

$$R^2 - NH\underset{\underset{O}{\|}}{C} - R^1 - \underset{\underset{O}{\|}}{C}NH - R^3$$

wherein $R^1$, $R^2$ and $R^3$ each represents a saturated or unsaturated straight chain or branched chain hydrocarbon residue having from 1 to 10 carbon atoms, an alicyclic hydrocarbon residue, an aromatic hydrocarbon residue or a residue containing one of the above defined residues.

The present invention is a further development of the above described technique.

Our EP-A-0155194 was published on 18 September 1985 which is after the date of the present application although it claims priority from a date before the presently claimed priorities; it discloses a thermoplastic resin composition comprising an amorphous resin and a diamide compound similar to a compound of the second formula in the present process, but wherein the central group is an aliphatic hydrocarbon residue having not more than ten carbon atoms (which does not fall within the present definition of $R^4$ having from 11 to 20 carbon atoms).

JP-A-55-40781 discloses a composition for making a film which comprises a polycarbonate resin and an amide compound of a formula similar to the first or second of the formulae in the present application, but wherein the terminal groups are aliphatic hydrocarbon residues (whereas in the compounds used herein these groups $R^2$ and $R^3$ are aromatic).

According to the present invention there is provided a process for producing a thermoplastic resin moulding which comprises heating a composition containing an amorphous thermoplastic resin, having a crystallinity of no more than 20%, as measured by X-ray diffraction under ordinary conditions of use, and having a glass transition temperature of at least 120°C, and 0.1 to 25 parts by weight of an organic compound of one of the formulae shown below to a temperature high enough to melt said resin, said organic compound being compatible with said resin to form a homogenous phase with the molten resin and being able to phase-separate from said resin when the resin containing said organic compound is cooled to a solidified state;

molding the molten composition; and cooling said molded composition to produce a molding in which said organic compound is present in the form of fine particles. By the process of the present invention the molding properties of the thermoplastic resin are improved, and there can be produced large size or thin moldings having excellent heat resistance and good surface luster.

(1) Thermoplastic resins.

The process of the present invention is applied to amorphous thermoplastic resins having a glass transition temperature of at least 120 °C. In the present specification, amorphous resin is defined as an amorphous thermoplastic high polymer having a crystallinity, as measured by X-ray diffraction, of 20% or less under ordinary conditions of use.

For example, it is possible to use thermoplastic resins such as polystyrene, high impact polystyrene, styrene copolymers (e.g., ABS resin), polyvinyl chloride, polymethacrylic acid esters, polyacrylic acid derivatives, polycarbonate, polynorbornene resins, polyarylates, polysulfones, polyether sulfones, polyphenylene ethers and modifications of such polymers for example polycarbonate grafted with styrene.

Blends of these thermoplastic resins (polymer alloys) can of course be utilized. For example, there may be cited an alloy of polyphenylene ether and polystyrene.

Preferred for use in the process of the present invention are polyphenylene ethers particularly those having a repeating structural unit represented by the following general formula:

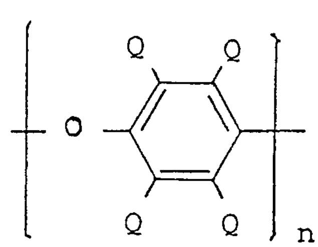

wherein the ether oxygen atom in the unit bonds to a benzene ring in the adjacent unit, n is at least 50, and Q represents a monovalent substituent selected from hydrogen, halogen, hydrocarbon groups having no tertiary α-carbon atom, halogenated hydrocarbon groups having at least 2 carbon atoms between the halogen atom and the phenyl nucleus, hydrocarbon oxy groups and halogenated hydrocarbon oxy groups having at least 2 carbon atoms between the halogen atom and the phenyl group.

Typical examples of polyphenylene ethers include poly(2,6-dimethyl-1,4-phenylene)ether poly(2,6-diethyl-1, 4-phenylene)ether, poly(2-methyl-6-ethyl-1,4-phenylene)ether, poly(2-methyl-6-propyl-1,4-phenylene)ether, poly(2,6-dipropyl-1,4-phenylene)ether, poly(2-ethyl-6-propyl-1,4-phenylene)ether, poly(2,6-dibutyl-1,4-phenylene)ether, poly(2,6-dipropenyl-1,4-phenylene)ether, poly(2,6-dilauryl-1,4-phenylene)ether poly(2,6-diphenyl -1,4-phenylene)ether, poly(2,6-dimethoxy-1,4-phenylene)ether, poly(2,6-diethoxy-1,4-phenylene)ether, poly( 2-methoxy-6-ethoxy-1,4-phenylene)ether, poly(2-ethyl-6-stearyloxy-1,4-phenylene)-ether, poly(2,6-dichloro-1, 4-phenylene)ether, poly(2-methyl-6-phenyl-1,4-phenylene)ether, poly(2,6-dibenzyl-1,4-phenylene)ether, poly(2-ethoxy-1,4-phenylene)ether, poly(2-chloro-1,4-phenylene)ether, poly(2,5-dibromo-1,4-phenylene)ether and analogues thereof.

In addition, there may be used copolymers such as a copolymer of 2,6-dimethylphenol and 2,3,6-trimethylphenol, a copolymer of 2,6-dimethylphenol and 2,3,5,6-tetramethylphenol, and a copolymer of 2,6-diethylphenol and 2,3,6-trimethylphenol.

Furthermore, the polyphenylene ethers which may be used in the present invention include modified polyphenylene ethers, for example, a graft polymer obtained by grafting styrene monomer (for example, styrene, p-methylstyrene or α-methylstyrene) to a polyphenylene ether represented by the above general formula.

Styrene resin may be added to the above-described polyphenylene ether. As styrene resin, there may be exemplified homopolymers such as polystyrene, poly-α-methylstyrene and poly-p-methylstyrene, high impact polystyrene modified with a rubber such as butadiene rubber, styrenebutadiene copolymer, ethylene-propylene copolymer or ethylene-propylene-diene terpolymer; and copolymers such as styrene-butadiene copolymer, styrene-maleic acid anhydride copolymer, styrene-acrylonitrile copolymer, styrene-acrylonitrile-butadiene copolymer and styrenemethyl methacrylate copolymer. The styrene resin is blended in an amount of from 0 to 2000 parts by weight, preferably of from 0 to 1000 parts by weight, and more preferably of from 10 to 500 parts by weight, per 100 parts by weight of the polyphenylene ether resin.

In order to improve impact resistance, one or more other polymers may be added to the polyphenylene ether or composition of polyphenylene ether and styrene resin.

Examples of such other polymers are natural and synthetic elastic polymers, e.g., natural rubber, polyisoprene, polybutadiene, and copolymers (including block copolymers) of styrene and conjugated diene such as butadiene, ethylene-propylene copolymers and ethylene-propylene-nonconjugated diene terpolymer. Polyolefins grafted onto polyphenylene ether or styrene resin may also be used.

(2) Fluidity improving agents.

The organic compound used as a fluidity improving agent in the present invention is compatible with the thermoplastic resin in the molten state of said resin and forms a homogeneous phase therewith, but undergoes phase separation on cooling of the composition so that in the solidified state of the resin the compound is dispersed in the composition as very fine particles.

In the present Specification, the term "molten state" means the state in which the resin is fluid and capable of being molded. Generally, it means the state in which the resin is above its glass transition temperature or crystal melting point.

The term "solidified state" means the state in which the resin is below the temperature at which its molding properties are lost. Generally it means the state in which the resin is below its crystal melting point or glass transition temperature, typically a temperature at which moldings are used.

It is preferred that the separated organic compound be in a state in which the very fine particles thereof are uniformly dispersed. Generally, the dispersed particles of the organic compound preferably have an average diameter of 10μm or less, more preferably 5μm or less and, most preferably, 3μm to 0.1μm, calculated as weight average. The average particle size can be measured by means of a microanalyzer using a photograph obtained by an electron microscope. The particle size of the organic compound varies according to the relation between the organic compound and the resin phase and the cooling conditions.

For use as a fluidity-improving agent in the process of the present invention an organic compound should be

(a) a low molecular weight compound having a moiety compatible with matrix component during molding, namely in a molten state so as to act as a plasticizer;

(b) a compound which undergoes phase separation from the matrix by crystallization at a temperature below the molding temperature (i.e., below the glass transition temperature of the matrix); and,

(c) a compound which exhibits a comparatively strong polarity so as to ensure crystallization at a temperature below the molding temperature, and includes a group having an affinity for the matrix component so as to exhibit interfacial adhesive strength to the matrix, even if phase separation occurs on crystallization.

The organic compound constituting the fluidity improving agent should have a melting point which is somewhat (preferably at least about 5 C°) lower than the molding temperature. The molding temperature is generally chosen in a range having as its lower limit the temperature at which flowing of the system occurs (glass transition temperature of the matrix or melting point of the crystal line structure) and as its upper limit the temperature at which decomposition of the system occurs, a suitable molding temperature being chosen according to the particular system. Accordingly, a desirable melting point for the organic compound is generally in a range from 100°C to 400°C, though it is selected according to the molding temperature of the thermoplastic resin used.

The classes cf organic compounds which are used in the invention are as follows :

Amide compounds represented by the following general formulae:

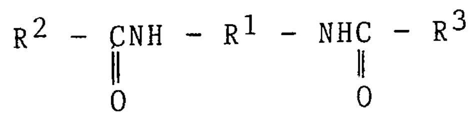

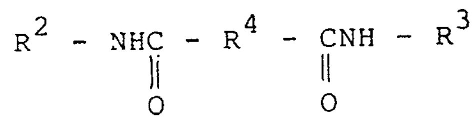

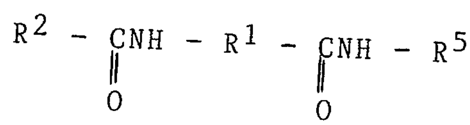

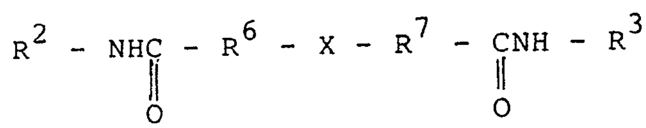

wherein

$R^1$ represents a substituted or unsubstituted saturated or unsaturated straight chain or branched chain hydrocarbon residue having from 1 to 20 carbon atoms, preferably from 1 to 10 carbon atoms, a substituted or unsubstituted alicyclic hydrocarbon residue having from 3 to 20 carbon atoms, a substituted or unsubstituted aromatic hydrocarbon residue having from 6 to 20 carbon atoms;

$R^2$ and $R^3$ each represent a substituted or unsubstituted, saturated or unsaturated aromatic hydrocarbon radical. having from 6 to 10 carbon atoms.

$R^4$ represents a substituted or unsubstituted saturated or unsaturated straight chain or branched chain hydrocarbon residue having 11 to 20 carbon atoms, a substituted or unsubstituted alicyclic hydrocarbon residue having from 11 to 20 carbon atoms, a substituted or unsubstituted aromatic hydrocarbon residue having from 11 to 20 carbon atoms;

$R^5$ represents a substituted or unsubstituted saturated or unsaturated straight chain or branched chain hydrocarbon residue having from 1 to 10 carbon atoms, a substituted or unsubstituted alicyclic hydrocarbon residue having from 3 to 10 carbon atoms, a substituted or unsubstituted aromatic hydrocarbon residue having from 6 to 10 carbon atoms;

$R^6$ and $R^7$ each represent a substituted or unsubstituted saturated or unsaturated straight chain or branched chain hydrocarbon residue, a substituted or unsubstituted alicyclic hydrocarbon residue having at least 3 carbon atoms, a substituted or unsubstituted aromatic hydrocarbon residue, the total number of carbon atoms in $R^6$ and $R^7$ being from 2 to 10; and,

-X- represents -O-, -S-, $>CO$, -COO- or $>SO_2$.

Examples of $R^1$ include a methylene group, an ethylene group, a trimethylene group, a propylene group, a tetramethylene group, an isobutylene group, a pentamethylene group, a cyclopentylene group, a hexamethylene group, a cyclohexylene group, an octamethylene group, a decamethylene group, a phenylene group, a naphthalene group, a biphenylene group and a diphenylenemethane group.

Furthermore, $R_1$ includes residues obtained by bonding a plurality of the hydrocarbon radicals defined hereinbefore with, for example, one or more of the following linking groups, the carbon numbers of which are not more than 20:

-O- (oxy group)
-S- (thio group)
$-SO_2-$ ( sulfonyl group)
-C- (carbonyl group) or
-COO- (carbonyloxy group).

$R^2$ and $R^3$ may each be a phenyl group.

$R^1$, $R^2$ and $R^3$ may have one or more substitments such as as follows:
a halogen such as Cl, Br or F;
$-NO_2$, -NO, -CN or -OH;
a hydrocarbon group having from 1 - 10 C atoms;
$-OR^9$ where $R^9$ is
H or a hydrocarbon group having from 1 - 10 C atoms;
$-NR^{10}R^{11}$ where $R^{10}$ and $R^{11}$ are H or a hydrocarbon group having from 1 to 10 carbon atoms;
$-OCOR^{12}$ or - $COR^{12}$, where
$R^{12}$ is a hydrocarbon group having from 1 - 10 C atoms;
$-COOR^{13}$ where $R^{13}$ is
H or a hydrocarbon group having from 1 - 10 C atoms;
$-SO_2R^{15}$ is OH or a
hydrocarbon group having from 1 - 10 C atoms;
with the proviso that the total number of carbon atoms for $R^1$, $R^2$ and $R^3$, as defined hereinbefore, is not exceeded.

Examples of $R^4$ include a dodecamethylene group, a biphenylene group, a diphenylenemethane group, and residues obtained by bonding a plurality of, for example, methylene groups, ethylene groups, trimethylene groups, propylene groups, tetramethylene groups, isobutylene groups, pentamethylene groups, cyclopentylene groups, hexamethylene groups, cyclohexylene groups, octamethylene groups, decamethylene groups, phenylene groups and naphthalene groups, with, for example, one or more of the following linking groups:

-O- (oxy group)
-S- (thio group)
$-SO_2-$ (sulfonyl group)
-CO- (carbonyl group)
-COO- (carbonyloxy group)

$R^4$ may be substituted with a halogen atom or a hydroxy group.

Examples of $R^5$ include the groups cited as examples for $R^2$.

Examples of $R^6$ and $R^7$ include a hydrocarbon residue such as a methylene group, an ethylene group, a trimethylene group, a propylene group, a tetramethylene group, an isobutylene group, a pentamethylene group, a cyclopentylene group, a hexamethylene group, a cyclohexylene group, an octamethylene group and a phenylene group.

The amount of the organic compound added is in the range of from 0.1 to 25 parts by weight, preferably from 0.5 to 20 parts by weight, more preferably from 1 to 10 parts by weight, per 100 parts by weight of the thermoplastic resin.

(3) Additives, etc.

Generally, various additives are incorporated into the thermoplastic resin according to its intended use. For example, there may be added reinforcing agents such as glass fibers, inorganic fillers, stabilizers, plasticizers, fire retardants, releasing agents and coloring agents.

The process of the present invention can be applied not only to a system composed only of the thermoplastic resin and organic compound, but also a complex system in which the above described various additives are present.

(4) Molding process.

As molding processes ordinarily used in the art can be used in practising the present invention. Generally, an extrusion molding process, an injection molding process and a blow molding process are used.

In order to separate the organic compound from the resin so as to disperse it in the form of very fine particles, the molding is cooled.

With some organic compounds, separation occurs rapidly and the organic compound is separated by the cooling step in a conventional molding process. However, with other compounds, separation requires a long time. In such cases, cooling should be carried out over a long period of time by reducing the cooling rate. Particularly, the temperature should be kept in ranges lower than the melting point of the organic compound and higher than the solidifying temperature of the matrix (glass transition temperature of the matrix or melting point).

Cooling can be carried out with heat treatment of the resultant molding at a temperature slightly (preferably about 5°C) higher than the solidifying temperature of the matrix.

In the following, the present invention will be illustrated in detail with reference to Examples and Comparative Examples.

EXAMPLES 1 AND 2

100 parts by weight of polyarylate resin (produced by Unitika Ltd.; U polymer U-100) and a certain amount of N,N'-dibenzoylethylenediamine (melting point: 244°C) were kneaded by melting at 320°C for 5 minutes by means of a Brabender plastomill. After completion of kneading, melt index was measured (290°C, load: 20 kg) using a part of it. The other part was molded by a press molding apparatus having a mold temperature of 280°C. After it was cooled to 50°C over 10 minutes, the molding was taken out from the mold.

Results of measuring thermal transformation temperature of the resultant molding are shown in Table 1.

Comparative EXAMPLE 1

Results obtained in the same manner as in Example 1 except that N,N'-diheptanoyl-p-phenylenediamine was used instead of N,N'-dibenzoylethylenediamine are shown in Table 1.

COMPARATIVE EXAMPLE 2

Results obtained in the same manner as in Example μm except that N,N-dibenzoylethylenediamine was not used are shown in Table 1.

Table 6

| | Organic Compound | Amount added (part by weight) | Melt index (g/10 min) | Thermal transformation temperature (°C) |
|---|---|---|---|---|
| Example 1 | N,N'-Dibenzoylethylenediamine | 1 | 10.3 | 166 |
| " 2 | " | 3 | 29.3 | 159 |
| Comparative Example 1 | N,N'-Diheptanoyl-p-phenylenediamine | 1 | 12.6 | 165 |
| Comparative Example 2 | Absence | 0 | 3.6 | 169 |

EXAMPLES 3 AND 4

Results obtained in the same manner as in Example 1 except that 100 parts by weight of polyether sulfone resin (produced by I.C.I. Ltd.; trade name: 200P) were used instead of polyarylate resin are shown in Table 2.

COMPARATIVE EXAMPLE 3

Results obtained in the same manner as in Example 16 except that N,N'-diheptanoyl-p-phenylenediamine was used instead of N,N'-dibenzoylethylenediamine are shown in Table 2.

COMPARATIVE EXAMPLE 4

Results obtained in the same manner as in Example 17 except that N,N'-dibenzoylethylenediamine was not used are shown in Table 2.

Table 2

| | Organic Compound | Amount added (part by weight) | Melt index (g/10 min) | Thermal transformation temperature (°C) |
|---|---|---|---|---|
| Example 3 | N,N'-Dibenzoyl-ethylenediamine | 1 | 15.2 | 198 |
| " 4 | " | 3 | 29.5 | 195 |
| Comparative Example 3 | N,N'-Diheptanoyl-p-phenylenediamine | 3 | 32.5 | 191 |
| Comparative Example 4 | Absence | 0 | 7.0 | 203 |

EXAMPLE 5

Results obtained in the same manner as in Example 1 except that polysulfone resin (produced by Nissan Chemical Co.; trade name: UDEL P1700) was used in an amount of 100 parts by weight instead of polyarylate resin are shown in Table 3.

COMPARATIVE EXAMPLE 5

Results obtained in the same manner as in Example 20 except that N,N'-dibenzoylethylenediamine was not used are shown in Table 3.

Table 3

| | Organic Compound | Amount added (part by weight) | Melt index (g/10 min) | Thermal transformation temperature (°C) |
|---|---|---|---|---|
| Example 5 | N,N'-Dibenzoyl-ethylenediamine | 5 | 54.5 | 161 |
| Comparative Example 5 | Absence | 0 | 19.6 | 171 |

COMPARATIVE EXAMPLE 6

50 parts by weight of poly-2,6-dimethyl-1,4-phenylene ether (produced by Mitsubishi Petro-Chemical Co.; intrinsic viscosity in chloroform at 25° C: 0.50), 50 parts by weight of high impact styrene (produced by Mitsubishi Petro-Chemical Co.; number average molecular weight: 55,000; weight average molecular weight: 200,000; microgel content: 14.5 % by weight) and 5 parts by weight of N,N'-diheptanoyl-p-phenylenediamine represented by the following structural formula:

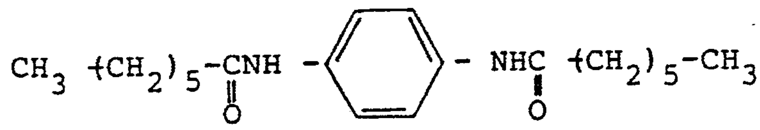

(melting point measured by a melting point tester MP-1 type produced by Yamato Kagaku Co.: 211 °C) were kneaded by melting at 260 °C for 7.5 minutes by means of a Brabender mill.

After completion of kneading, melt index which showed molding property (fluidity) (250 °C, load of 10 kg) was measured. On the other hand, a desired test piece was produced by pressing and thermal transformation temperature was measured (load: 18.6 kg/cm$^2$). Results are shown in Table 4.

EXAMPLE 6

Results obtained in the same manner as in Comparative Example 6 except that 5 parts by weight of N,N'-dibenzoyl-m-phenylenediamine (melting point: 213 °C) were used instead of N,N'-diheptanoyl-p-phenylenediamine are shown in Table 4.

EXAMPLE 7

Results obtained in the same manner as in Comparative Example 6 except that 5 parts by weight of 2,2'-bis(phenylcarbamoyl)-biphenyl represented by the following structural formula

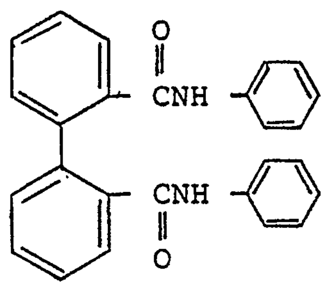

(melting point measured by a melting point tester MP-1 type: 230 °C) were added instead of N,N'-diheptanoyl-p-phenylenediamine are shown in Table 4.

EXAMPLE 8

Results obtained in the same manner as in Example 21 except that 5 parts by weight of N-phenyl-δ-bensoylamino-n-valeramide represented by the following structural formula:

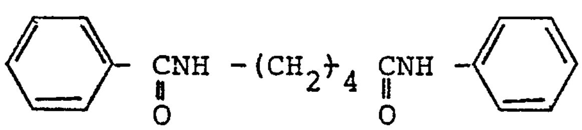

(melting point measured by a melting point tester MP-1 type produced by Yamato Kagaku Co.: 170 °C) were added instead of N,N'-diheptanoyl-p-phenylenediamine are shown in Table 4.

EXAMPLE 9

Results obtained in the same manner as in Comparative Example 6 except that 5 parts by weight of diglycolic acid dianilide represented by the following structural formula:

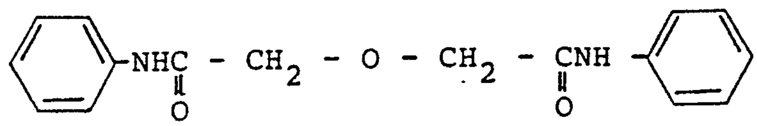

(melting point measured by a melting point tester MP-1 type produced by Yamato Kagaku Co.: 153 °C) were added instead of N,N'-diheptanoyl-p-phenylenediamine are shown in Table 4.

Table 4

| | Organic Compound | Melt index (g/10 min) | Thermal transformation temperature (°C) |
|---|---|---|---|
| Comparative Example 6 | N,N'-Diheptanoyl-p-phenylenediamine | 8.3 | 135 |
| Example 6 | N,N'-Dibenzoyl-m-phenylenediamine | 9.5 | 130 |
| " 7 | 2,2'-Bis(phenylcarbamoyl)biphenyl | 8.3 | 130 |
| " 8 | N-Phenyl-δ-benzoylamino-n-valeramide | 11.3 | 128 |
| " 9 | Diglycolic acid dianilide | 6.5 | 133 |

## Claims

**1.** A process for producing a thermoplastic resin moulding which comprises:

a) heating a composition containing an amorphous thermoplastic resin, having crystallinity of no more than 20%, as measured by X-ray diffraction under ordinary conditions of use, and having a glass transition temperature of at least 120 °C, and 0.1 to 25 parts by weight of an organic compound to a temperature high enough to melt said resin, said organic compound being compatible with said resin to form a homogeneous phase with the molten resin and being able to phase-separate from said resin when the resin containing said organic compound is cooled to a solidified state; and said compound being of one of the general formula:

$$R^2-\underset{\underset{O}{\|}}{C}NH-R^1-NH\underset{\underset{O}{\|}}{C}-R^3$$

$$R^2-NH\underset{\underset{O}{\|}}{C}-R^4-\underset{\underset{O}{\|}}{C}NH-R^3$$

$$R^2-\underset{\underset{O}{\|}}{C}NH-R^1-\underset{\underset{O}{\|}}{C}NH-R^5$$ and

$$R^2-NH\underset{\underset{O}{\|}}{C}-R^6-X-R^7-\underset{\underset{O}{\|}}{C}NH-R^3 .$$

wherein $R^1$ represents a substituted or unsubstituted, saturated or unsaturated straight chain or branched chain hydrocarbon radical having from 1 to 20 carbon atoms, a substituted or unsubstituted alicyclic hydrocarbon radical having from 3 to 20 carbon atoms, or a substituted or unsubstituted aromatic hydrocarbon radical having from 6 to 20 carbon atoms,
$R^2$ and $R^3$ each represent a substituted or unsubstituted aromatic hydrocarbon radical having from 6 to 10 carbon atoms,
$R^4$ represents a substituted or unsubstitued saturated or unsaturated, straight chain or branched chain hydrocarbon radical having from 11 to 20 carbon atoms, a substituted or unsubstituted alicyclic hydrocarbon radical having from 11 to 20 carbon atoms, or a substituted or unsubstituted aromatic hydrocarbon radical having from 11 to 20 carbon atoms,
$R^5$ represents a substituted or unsubstituted, saturated or unsaturated straight chain or branched chain hydrocarbon radical having from 1 to 10 carbon atoms, a substituted or unsubstituted alicyclic hydrocarbon radical having from 3 to 10 carbon atoms, or a substituted or unsubstituted aromatic hydrocarbon radical having from 6 to 10 carbon atoms,
$R^6$ and $R^7$ each represent a substituted or unsubstituted, saturated or unsaturated straight chain or branched chain hydrocarbon radical, a substituted or unsubstituted alicyclic hydrocarbon radical, or a substituted or unsubstituted aromatic hydrocarbon radical, wherein the total of carbon atoms in $R^6$ and $R^7$ is 2 to 10; and

-X-represents -O-, -S-, $>CO$, -COO- or $>SO_2$;

b) molding the molten composition; and
c) cooling said melt, thus achieving phase separation of said organic compound as fine particles within the resin and solidification of the molten resin.

**2.** A process as claimed in Claim 1, wherein said thermoplastic resin is a polyphenylene ether or a blend of a polyphenylene ether and a styrene resin.

**3.** A process as claimed in Claim 1 or 2, wherein said organic compound has a melting point of from 100 to 400 °C.

**4.** A process as claimed in Claim 1, 2 or 3, wherein said organic compound is incorporated in an amount

of from 0.5 to 20 parts by weight per 100 parts by weight of the total amount of said thermoplastic resin.

## Revendications

**1.** Procédé de préparation d'un objet moulé en résine thermoplastique, qui comprend les étapes suivantes :

a) chauffage d'une composition contenant une résine thermoplastique amorphe, ayant une cristallinité ne dépassant pas 20 %, mesurée par diffraction aux Rayons-X dans les conditions ordinaires d'utilisation, et ayant une température de transition vitreuse d'au moins 120°C, et de 0,1 à 25 parties en poids d'un composé organique, à une température suffisamment élevée pour faire fondre la résine, ledit composé organique étant compatible avec cette résine pour former une phase homogène avec la résine fondue et étant susceptible d'une séparation de phase d'avec la résine quand la résine contenant ce composé organique est refroidie à l'état solidifié ; et ledit composé ayant l'une des formules générales suivantes :

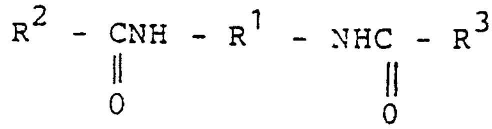

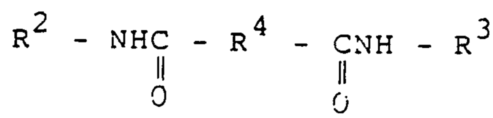

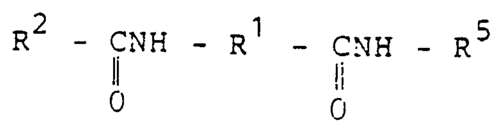

et

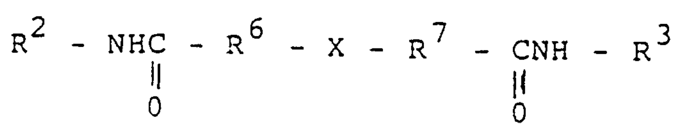

dans lesquelles $R^1$ représente un radical hydrocarbure à chaîne linéaire ou ramifiée, saturé ou insaturé, substitué ou non-substitué, ayant de 1 à 20 atomes de carbone, un radical hydrocarbure alicyclique, substitué ou non-substitué, ayant de 3 à 20 atomes de carbone, ou un radical hydrocarbure aromatique, substitué ou non-substitué, ayant de 6 à 20 atomes de carbone,

$R^2$ et $R^3$ représentent chacun un radical hydrocarbure aromatique, substitué ou non-substitué, ayant de 6 à 10 atomes de carbone,

$R^4$ représente un radical hydrocarbure à chaîne linéaire ou ramifiée, saturé ou insaturé, substitué ou non-substitué, ayant de 11 à 20 atomes de carbone, un radical hydrocarbure alicyclique, substitué ou non-substitué, ayant de 11 à 20 atomes de carbone, ou un radical hydrocarbure aromatique, substitué ou non substitué ayant de 11 à 20 atomes de carbone,

$R^5$ représente un radical hydrocarbure à chaîne linéaire ou ramifiée, saturé ou insaturé, substitué ou non-substitué, ayant de 1 à 10 atomes de carbone, un radical hydrocarbure alicyclique, substitué ou non-substitué, ayant de 3 à 10 atomes de carbone ou un radical hydrocarbure aromatique, substitué ou non-substitué, ayant de 6 à 10 atomes de carbone,

$R^6$ et $R^7$ représentent chacun un radical hydrocarbure à chaîne linéaire ou ramifiée, saturé ou insaturé, substitué ou non-substitué, un radical hydrocarbure alicyclique substitué ou non-substitué ou un radical hydrocarbure aromatique substitué ou non-substitué, dans lesquels le nombre total

d'atomes de carbone dans $R^6$ et $R^7$ est compris entre 2 et 10 ; et
-X- représente : -O-,-S-, CO,-COO-ou $SO_2$ ;
b) moulage de la composition fondue ; et
c) refroidissement de la matière fondue, permettant ainsi la séparation de phase dudit composé organique sous forme de fines particules au sein de la résine, puis solidification de la résine fondue.

**2.** Procédé tel que revendiqué dans la revendication 1, dans lequel la résine thermoplastique est un éther de polyphénylène ou un mélange d'un éther de polyphénylène et d'une résine de styrène.

**3.** Procédé tel que revendiqué dans l'une des revendications 1 ou 2, dans lequel le composé organique a un point de fusion compris entre 100 °C et 400 °C.

**4.** Procédé tel que revendiqué dans l'une des revendications 1, 2 ou 3, dans lequel le composé organique est incorporé en quantité pouvant aller de 0,5 à 20 parties en poids pour 100 parties en poids du montant total de la résine thermoplastique.

**Patentansprüche**

**1.** Verfahren zur Herstellung eines thermoplastischen Harz-Formteils, umfassend
(a) Erhitzen einer Zusammensetzung auf eine Temperatur, die hoch genug ist, um diese Zusammensetzung zu schmelzen, wobei diese Zusammensetzung ein amorphes thermoplastisches Harz mit einer Kristallinität von nicht mehr als 20 %, bestimmt durch Röntgenbeugung unter normalen Anwendungsbedingungen, und einer Glas-Übergangstemperatur von mindestens 120°C und 0,1 bis 25 Gewichtsteile einer organischen Verbindung enthält, die mit dem genannten Harz vereinigt werden kann und mit dem geschmolzenen Harz eine homogene Phase bildet, und die die Fähigkeit zur Phasentrennung von dem genannten Harz hat, wenn das Harz, das diese organische Verbindung enthält, zu einem erstarrten Zustand abgekühlt ist; wobei die genannte Verbindung durch eine der folgenden allgemeinen Formeln dargestellt wird:

$$R^2 - \underset{\underset{O}{\|}}{C}NH - R^1 - NH\underset{\underset{O}{\|}}{C} - R^3$$

$$R^2 - NH\underset{\underset{O}{\|}}{C} - R^4 - \underset{\underset{O}{\|}}{C}NH - R^3$$

$$R^2 - \underset{\underset{O}{\|}}{C}NH - R^1 - \underset{\underset{O}{\|}}{C}NH - R^5 \quad \text{und}$$

$$R^2 - NH\underset{\underset{O}{\|}}{C} - R^6 - X - R^7 - \underset{\underset{O}{\|}}{C}NH - R^3$$

worin $R^1$ einen substituierten oder unsubstituierten, gesättigten oder ungesättigten unverzweigten oder verzweigten Kohlenwasserstoffrest mit 1 bis 20 Kohlenstoffatomen, einen substituierten oder unsubstituierten alicyclischen Kohlenwasserstoffrest mit 3 bis 20 Kohlenstoffatomen oder einen substituierten oder unsubstituierten aromatischen Kohlenwasserstoffrest mit 6 bis 20 Kohlenstoffato-

men bedeutet; $R^2$ und $R^3$ jeweils einen substituierten oder unsubstituierten aromatischen Kohlenwasserstoffrest mit 6 bis 10 Kohlenstoffatomen bedeuten; $R^4$ einen substituierten oder unsubstituierten gesättigten oder ungesättigten unverzweigten oder verzweigten Kohlenwasserstoffrest mit 11 bis 20 Kohlenstoffatomen, einen substituierten oder unsubstituierten alicyclischen Kohlenwasserstoffrest mit 11 bis 20 Kohlenstoffatomen oder einen substituierten oder unsubstituierten aromatischen Kohlenwasserstoffrest mit 11 bis 20 Kohlenstoffatomen bedeutet; $R^5$ einen substituierten oder unsubstituierten gesättigten oder ungesättigten unverzweigten oder verzweigten Kohlenwasserstoffrest mit 1 bis 10 Kohlenstoffatomen, einen substituierten oder unsubstituierten alicyclischen Kohlenwasserstoffrest mit 3 bis 10 Kohlenstoffatomen oder einen substituierten oder unsubstituierten aromatischen Kohlenwasserstoffrest mit 6 bis 10 Kohlenstoffatomen bedeutet; $R^6$ und $R^7$ jeweils einen substituierten oder unsubstituierten gesättigten oder ungesättigten unverzweigten oder verzweigten Kohlenwasserstoffrest, einen substituierten oder unsubstituierten alicyclischen Kohlenwassserstoffrest oder einen substituierten oder unsubstituierten aromatischen Kohlenwasserstoffrest bedeuten, worin die Summe der Kohlenstoffatome in $R^6$ und $R^7$ 2 bis 10 beträgt; und -X- -O-, -S-, CO, -COO- oder $SO_2$ bedeutet;

(b) Formen der geschmolzenen Zusammensetzung;

(c) Abkühlen der genannten Schmelze, um so eine Phasentrennung der genannten organischen Verbindung als feine Partikel in dem Harz und das Erstarren des geschmolzenen Harzes zu erreichen.

**2.** Verfahren nach Anspruch 1, worin das genannte thermoplastische Harz ein Polyphenylenether oder eine Mischung aus Polyphenylenether und Styrolharz ist.

**3.** Verfahren nach Anspruch 1 oder 2, wobei die genannte organische Verbindung einen Schmelzpunkt von 100 bis 400°C hat.

**4.** Verfahren nach einem der Ansprüche 1, 2 oder 3, wobei die genannte organische Komponente in einer Menge von 0,5 bis 20 Gewichtsteile pro 100 Gewichtsteile der Gesamtmenge des genannten thermoplastischen Harzes enthalten ist.